# FASCICULE DE BREVET EUROPEEN

(11) **EP 3 350 861 B1**
(45) Date de publication et mention de la délivrance du brevet: **30.10.2019**
(21) Numéro de dépôt: 16774528.0
(22) Date de dépôt: 12.09.2016
(51) Int. Cl.: H01M 8/04, H01M 8/1004, H01M 8/0273, H01M 8/0284, H01M 8/04029, H01M 8/1018, H01M 8/0258, H01M 8/04007, H01M 8/04225, H01M 8/0202, H01M 8/043, H01M 8/04701

(54) **PILE A COMBUSTIBLE MUNIE D'UN SYSTEME DE REGULATION DE TEMPERATURE ET PROCEDE DE REGULATION THERMIQUE DE LA PILE**
BRENNSTOFFZELLE MIT EINEM TEMPERATURSTEUERUNGSSYSTEM UND VERFAHREN ZUR THERMISCHEN REGELUNG DER ZELLE
FUEL CELL PROVIDED WITH A TEMPERATURE-CONTROL SYSTEM AND METHOD FOR THERMAL CONTROL OF THE CELL

(30) Priorité: 15.09.2015 FR 1558596
(43) Date de publication de la demande: 25.07.2018
(73) Titulaire: Safran Power Units, 31200 Toulouse (FR)
(72) Inventeur: VERDIER, Antoine, 60560 Orry la ville (FR); HORDÉ, Théophile, 31200 Toulouse (FR); BOUDJEMAA, Fabien, 31130 Balma (FR)
(74) Mandataire: Cabinet Beau de Loménie
(86) Numéro de dépôt international: PCT/FR2016/052284
(87) Numéro de publication internationale: WO 2017/046495

(56) Documents cités:
- WO-A1-2007/064338
- US-A1- 2003 235 735
- US-A1- 2009 181 272
- De Diffuseurs ET AL: "ETUDES EXPERIMENTALE ET THEORIQUE", , 8 décembre 2006 (2006-12-08), XP055291237, Extrait de l'Internet: URL:http://theses.insa-lyon.fr/publication /2006ISAL0114/these.pdf [extrait le 2016-07-26]

## Description

### Arrière-plan de l'invention

La présente invention concerne une pile à combustible comprenant un système de régulation thermique de la pile à combustible, en particulier une pile à membrane échangeuse de protons.

Les piles à combustible comprennent généralement un empilement de cellules élémentaires, aussi appelé « stack » disposé entre deux collecteurs de courant. Chaque cellule élémentaire est composée d'un assemblage membrane/électrodes, formé d'une membrane échangeuse de protons disposée entre une électrode anodique et une électrode cathodique, l'ensemble étant disposé entre deux plaques bipolaires, l'assemblage membrane/électrodes est lui-même disposé entre deux plaques distributrices, aussi appelées plaques bipolaires. Lors de l'empilement des cellules élémentaires, les plaques distributrices disposées entre deux assemblages membrane/électrodes permettent la circulation d'hydrogène sur l'une de leur face et d'air sur la face opposée, on les nomme aussi plaques bipolaires.

Chaque pile à combustible à une température optimale de fonctionnement qui dépend de la nature des différents composants formant la pile. Aussi, afin de garantir un fonctionnement optimal ainsi qu'une durée de vie maximale de la pile à combustible, il est recommandé que la pile puisse être maintenue à une température voisine de cette température optimale et ce, de manière homogène dans le stack.

Or, lors de son fonctionnement, la réaction électrochimique prenant place au sein de chaque cellule élémentaire est une réaction exothermique si bien que, si l'on souhaite maintenir la température de la pile à une température voisine de la température optimale de fonctionnement, il est avantageux de refroidir la pile à combustible. De manière connue, le dispositif de refroidissement de la pile comprend une pompe de circulation du liquide de refroidissement qui augmente l'encombrement de la pile à combustible et qui consomme de l'énergie.

Par ailleurs, pour initier la réaction électrochimique et maximiser le rendement énergétique de la pile rapidement, il est conseillé de préchauffer la pile à combustible, la température optimale de fonctionnement de la pile étant généralement supérieure à la température ambiante. Ce préchauffage peut être réalisé au moyen de résistances chauffantes disposées sur les extrémités de la pile à combustible. On comprend donc que le préchauffage de la pile n'est pas uniforme au sein du stack. En effet, les cellules élémentaires disposées au centre du stack, ont une température inférieure à la température des cellules élémentaires disposées à proximité des extrémités de la pile à combustible.

On comprend donc qu'il est connu de réaliser la fonction de préchauffage au moyen d'un dispositif de chauffage et la fonction de refroidissement au moyen d'un dispositif de refroidissement, distinct du dispositif de chauffe. Ces deux dispositifs sont agencés dans la pile à combustible. Bien qu'un tel agencement permette de réguler la température de la pile, il implique notamment un accroissement de masse et d'encombrement important de la pile. En outre, l'agencement des cellules élémentaires et des dispositifs de chauffe et de refroidissement peut s'avérer complexe. L'utilisation de diffuseurs thermiques diphasiques pour le refroidissement de piles à combustible est décrit dans le document suivant:

R. Rullière, Thèse doctorale, 08.12.2006, " Etudes expérimentale et théorique de diffuseurs thermiques diphasiques - Application au refroidissement de systèmes dissipatifs."

URL:http://theses.insa-lyon.fr/publication/2006ISAL0114/these.pdf

### Objet et résumé de l'invention

La présente invention vise à remédier au moins en partie à ces inconvénients.

A cet effet, l'invention a pour objet une pile à combustible comprenant
- un assemblage membrane/électrode comportant une membrane échangeuse de protons disposée entre une anode et une cathode ;
- deux plaques bipolaires disposées de part et d'autre de l'assemblage membrane/électrode et formant avec l'assemblage membrane/électrode une cellule élémentaire ; et
- un diffuseur thermique diphasique comprenant une zone de condensation et une zone d'évaporation, la zone d'évaporation étant disposée entre les plaques bipolaires de deux cellules élémentaires adjacentes ;
dans laquelle le diffuseur thermique diphasique comprend en outre un élément chauffant disposé dans la zone de condensation du diffuseur thermique diphasique.

Grâce à l'incorporation d'un élément chauffant dans la zone de condensation du diffuseur thermique diphasique, on combine les fonctions de refroidissement et de chauffe de la pile à combustible dans le diffuseur thermique diphasique ce qui simplifie la fabrication de la pile à combustible et réduit son encombrement. En effet, il n'est plus nécessaire de prévoir, au sein de la pile à combustible, un système de refroidissement et un système de chauffe distinct du système de refroidissement.

Par ailleurs, La disposition de la zone d'évaporation du diffuseur thermique diphasique entre deux cellules élémentaires adjacentes permet de chauffer ou de refroidir la pile à combustible de manière plus uniforme et plus efficace que lorsque par exemple la pile à combustible est échauffée par des résistances chauffantes disposées à chaque extrémité de la pile à combustible. En effet, la surface d'échange entre le diffuseur thermique diphasique et les cellules élémentaires est relativement importante du fait que la surface de la zone d'évaporation en contact avec la plaque bipolaire peut par exemple avoir les mêmes dimensions que la plaque bipolaire de sorte à maximiser la surface d'échange thermique entre la zone d'évaporation et la plaque bipolaire.

De plus, il est possible de disposer une pluralité de diffuseurs thermiques diphasiques au sein de la pile entre différentes cellules élémentaires adjacentes. On augmente l'homogénéité de la chauffe ou du refroidissement de la pile à combustible ainsi que l'efficacité de la régulation thermique au sein de la pile à combustible.

En outre, l'utilisation d'un diffuseur thermique diphasique permet d'éviter la présence d'une pompe pour faire circuler un liquide entre les cellules élémentaires de la pile à combustible.

L'élément chauffant peut comprendre une résistance chauffante, un élément inductif, un tube de circulation de fluide chaud, une ailette de circulation de gaz chaud, un brûleur ou un élément pyrotechnique.

Selon le type d'énergie disponible ou les contraintes imposées par l'ensemble comportant la pile à combustible, on privilégiera un type d'élément chauffant donné. Par exemple, si la pile à combustible est intégrée dans un ensemble dans lequel circule un gaz chaud, on peut récupérer une partie de ce gaz chaud pour préchauffer la pile à combustible.

Le diffuseur thermique diphasique peut être disposé entre deux cellules élémentaires, toutes les N cellules élémentaires, N étant un nombre entier naturel supérieur ou égal à 1, de préférence supérieur ou égal à 3, encore plus préférentiellement supérieur ou égal à 5.

Les échanges thermiques entre les cellules élémentaires et les diffuseurs thermiques diphasiques étant de bonne qualité, peut se permettre de disposer un diffuseur thermique diphasique par exemple toutes les trois, cinq, dix ou quinze cellules élémentaires.

Le diffuseur thermique diphasique peut constituer une plaque collectrice de courant de la pile à combustible.

Le diffuseur thermique diphasique étant un bon conducteur électrique, il peut également être utilisé comme plaque collectrice de courant. La fabrication de la pile à combustible est donc simplifiée. En effet, la pile à combustible est alors composée de cellules élémentaires et de diffuseurs thermiques diphasiques.

L'invention a également pour objet un système comprenant une pile à combustible telle que définie précédemment et un contrôleur, le contrôleur étant configuré pour piloter l'élément chauffant de sorte que pendant une phase de préchauffage, l'élément chauffant chauffe la pile à combustible jusqu'à une température prédéterminée, et que pendant une phase de fonctionnement en régime stable, l'élément chauffant soit éteint de sorte que le diffuseur thermique diphasique maintienne la température de la pile à combustible dans une plage donnée.

Le contrôleur peut également être configuré pour piloter une source froide.

L'invention a aussi pour objet un procédé de régulation thermique d'une pile à combustible telle que définie précédemment comportant les étapes suivantes :
- pendant une phase de préchauffage, un contrôleur pilote l'élément chauffant de sorte que l'élément chauffant chauffe la pile à combustible jusqu'à une température prédéterminée ; et
- pendant une phase de fonctionnement en régime stable, le contrôleur éteint l'élément chauffant de sorte que le diffuseur thermique diphasique maintienne la température de la pile à combustible dans une plage donnée.

Le contrôleur peut également piloter une source froide.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique éclatée d'une pile à combustible selon un premier mode de réalisation ;
- la figure 2 est une vue en perspective d'un assemblage membrane/électrode ;
- la figure 3 est une vue en perspective d'un diffuseur thermique diphasique comprenant un élément chauffant ;
- les figures 4 et 5 sont des vues en coupe du diffuseur thermique diphasique de la figure 3 selon les plans IV-IV et V-V ;
- la figure 6 est une vue en coupe du diffuseur thermique diphasique de la figure 3 selon le plan VI-VI de la figure 4 ;
- la figure 7 est une vue en perspective d'un système comprenant la pile à combustible de la figure 1 ;
- la figure 8 est un graphe représentant l'évolution de la température en fonction du temps d'une pile à combustible ; et
- la figure 9 est une vue schématique éclatée d'une pile à combustion selon un deuxième mode de réalisation.

### Description détaillée de l'invention

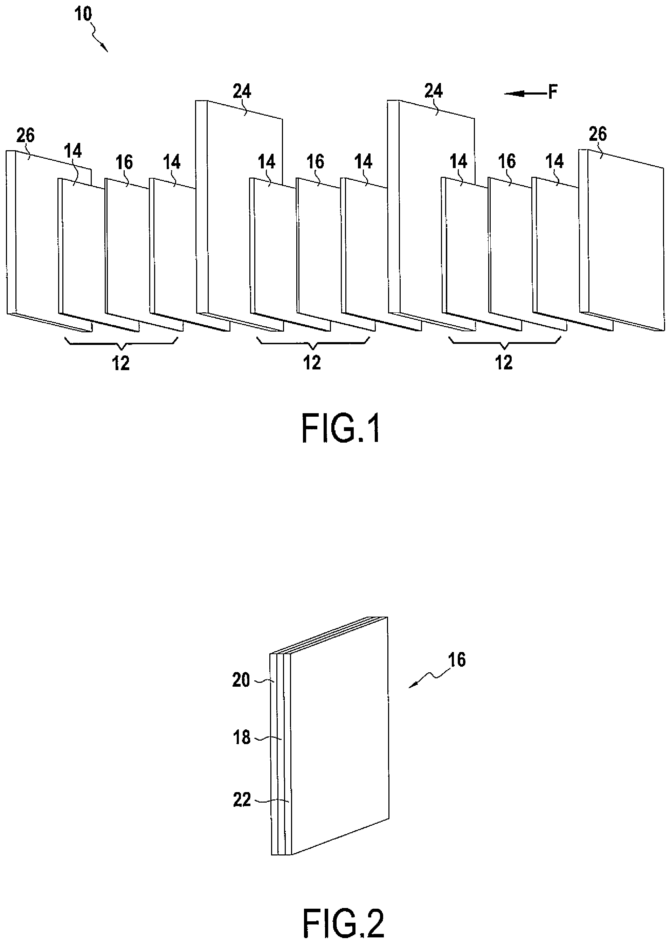

La figure 1 représente une vue schématique explosée d'une pile à combustible 10. La pile à combustible 10 comprend trois cellules élémentaires 12 comportant chacune deux plaques bipolaires 14 disposées de part et d'autre d'un assemblage membrane/électrode 16. L'assemblage membrane/électrode 16 représenté sur la figure 2 comprend une membrane échangeuse de protons 18 disposée entre une anode 20 et une cathode de 22. Chaque cellule élémentaire 12 est séparée de la cellule élémentaire 12 adjacente par un diffuseur thermique diphasique 24. Chaque diffuseur thermique diphasique 24 est donc disposé entre les plaques bipolaires 14 de deux cellules élémentaires 12 adjacentes. La pile à combustible 10 comprend également à chacune de ses extrémités une plaque collectrice de courant 26.

On comprend que dans la pile à combustible 10 les différents éléments représentés sur la vue explosée sont en contact les uns avec les autres.

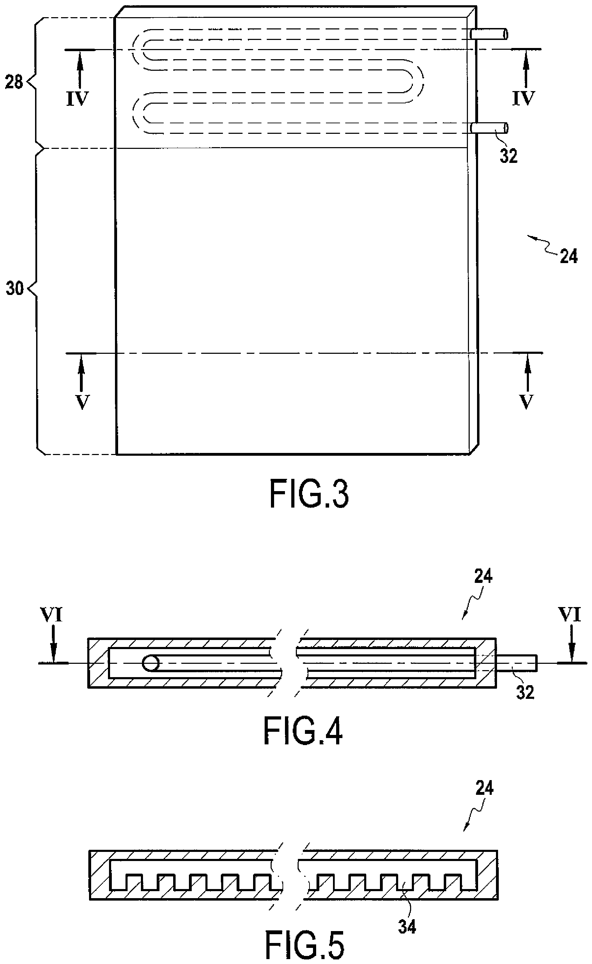

La figure 3 représente un diffuseur thermique diphasique 24 qui comporte une zone de condensation 28 et une zone d'évaporation 30 ainsi qu'un élément chauffant 32 disposé dans la zone de condensation 28. Comme cela est représenté sur la figure 1, la zone d'évaporation 30 est disposée entre les plaques bipolaires 14 de la pile à combustible 10 et la zone de condensation 28 est couplée thermiquement à une source froide F, par exemple un fluide tel qu'un gaz ou un liquide.

Dans la pile à combustible 10, la zone d'évaporation 30 est donc en contact avec les plaques bipolaires 14 afin d'assurer un bon échange thermique entre la cellule alimentaire 12 et le diffuseur thermique diphasique 24 et la zone de condensation 28 n'est pas en contact avec les plaques bipolaires 14 mais forme une saillie par rapport à ces plaques bipolaires 14.

Le diffuseur thermique diphasique 24 est réalisé dans un matériau ayant une conductivité thermique élevée, par exemple du cuivre, et il comprend un liquide qui est choisi en fonction d'une plage donnée de température dans laquelle la pile à combustible est maintenue lorsqu'elle fonctionne en régime stable. Cette plage de température est comprise entre +/- 10°C de la température de fonctionnement optimal de la pile à combustible 10, voire de préférence entre +/- 5°C de la température de fonctionnement optimal de la pile à combustible 10.

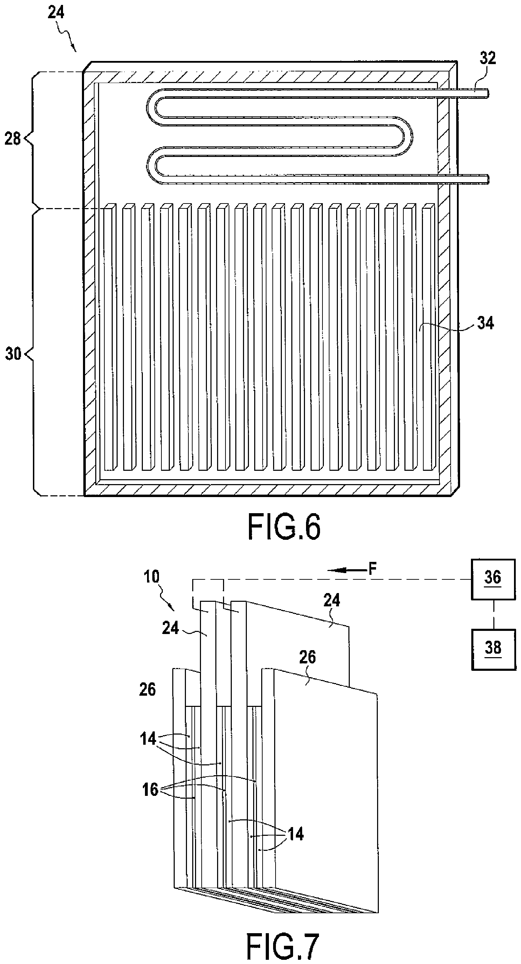

La figure 7 représente un système comprenant la pile à combustible de la figure 1 et un contrôleur 36.

Lors du démarrage de la pile à combustible 10, c'est-à-dire lors de la phase de préchauffage I, la pile à combustible 10 doit être préchauffée afin d'initier la réaction électrochimique au sein des cellules élémentaires 12 et de maximiser le rendement énergétique le plus rapidement possible.

Lors de cette phase de préchauffage I, le contrôleur 36 pilote l'élément chauffant 32 qui passe d'un état inactif un état actif, c'est-à-dire que l'élément chauffant 32 chauffe le diffuseur thermique diphasique 24 qui lui-même chauffe les cellules élémentaires 12 disposées de part et d'autre du diffuseur thermique diphasique 24.

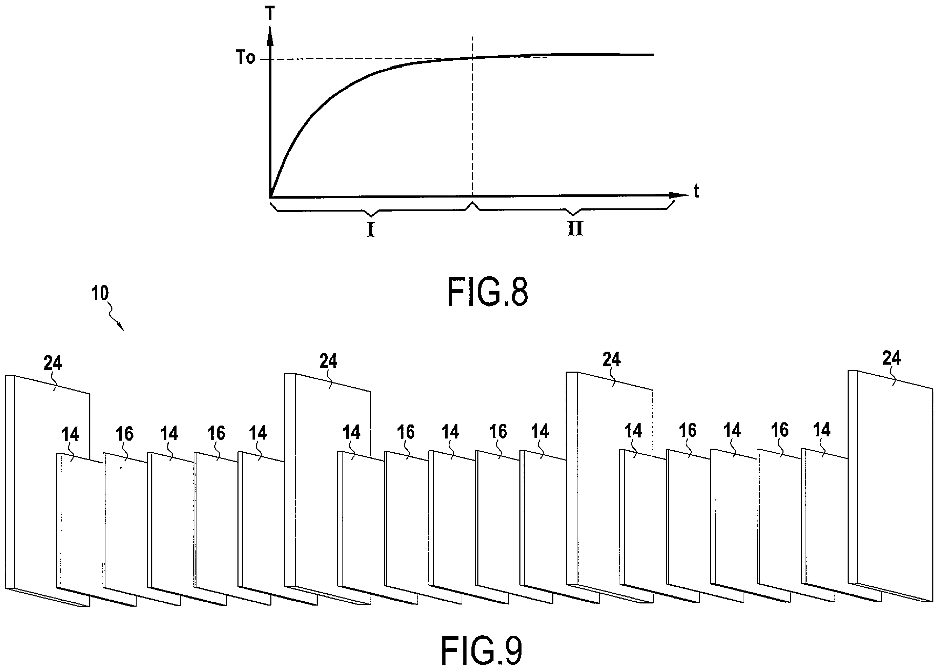

Comme cela est représenté sur la figure 8, la température T au sein de la pile à combustible 10 augmente cours du temps jusqu'à atteindre une température prédéterminée To.

Lorsque la température prédéterminée To est atteinte, la pile à combustible 10 passe en phase de fonctionnement en régime stable II. Le contrôleur 36 éteint l'élément chauffant 32.

La réaction électrochimique prenant place au sein de chaque cellule élémentaire 12 étant une réaction exothermique, le diffuseur thermique diphasique 24 refroidit les cellules élémentaires 12 entre lesquelles il est disposé afin de maintenir la température de la pile à combustible 10 dans une plage donnée.

Le liquide contenu dans le diffuseur thermique diphasique 24 est entraîné par gravité vers la zone d'évaporation 30 qui est munie de micro canaux 34. Ces micros canaux 34 permettent, par capillarité, de pomper le liquide contenu dans la zone de condensation 28 vers la zone d'évaporation 30.

Au contact de la cellule élémentaire 12, le liquide contenu dans la zone d'évaporation 30 chauffe et s'évapore. Par convection naturelle, cette vapeur est entraînée dans la zone de condensation 28 qui est couplée thermiquement avec la source froide F.

Au contact de la source froide F, la vapeur contenue dans la zone de condensation 28 se transforme en liquide qui, par gravité et pompage capillaire, est entraîné dans la zone d'évaporation 30.

On comprend donc que la chaleur des cellules élémentaires 12 de la pile à combustible 10 est dissipée par le diffuseur thermique diphasique 24.

Le contrôleur 36 pilote la source froide F, par exemple en contrôlant la vitesse de rotation d'un ventilateur 38 si le fluide de la source froide F est un gaz tel que par exemple de l'air, de sorte que le diffuseur thermique diphasique 24 maintienne la température de la pile à combustion 10 dans une plage donnée. En pratique, si la température de la pile à combustible 10 sort de la plage donnée de température, le contrôleur 36 augmente ou réduit la vitesse de rotation du ventilateur 38 de sorte à respectivement augmenter ou réduire la quantité de chaleur qui est dissipée par le diffuseur thermique diphasique 24, de sorte à respectivement réduire ou augmenter la température de la pile à combustible 10.

Dans un deuxième mode de réalisation représenté sur la figure 9, deux cellules élémentaires 12 sont disposées entre deux diffuseurs thermiques diphasiques 24 et deux diffuseurs thermiques diphasiques 24 sont disposés à chaque extrémité de la pile à combustible 10. Les plaques collectrices de courant de la pile à combustible 10 sont donc formées par les diffuseurs thermiques diphasiques 24.

Dans le mode de réalisation de la figure 9, certaines plaques bipolaires 14 sont disposées entre deux assemblages membrane/électrode.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

Notamment, sur la figure 1, la pile à combustible 10 comprend un empilement de trois cellules élémentaires 12. On comprend que cet exemple n'est pas limitatif.

Par ailleurs, le fluide de la source froide F peut être un liquide, et dans ce cas, le ventilateur 38 peut être remplacé par une pompe. On a également représenté sur la figure 7 un système comprenant un ventilateur 38. Toutefois, la pile à combustible 10 peut fonctionner sans ventilateur 38, par exemple lorsque la convection naturelle de l'air autour de la pile à combustible 10 est suffisante pour maintenir la température de la pile à combustible 10 dans la plage donnée de température. De même, lorsque le fluide de la source froide F est un liquide, on peut envisager de se passer de pompe si la convection naturelle du liquide permet de maintenir la température de la pile à combustible dans la plage donnée de température.

De plus, la température prédéterminée To peut être égale à la température de fonctionnement optimal de la pile à combustible 10. Toutefois, pour des raisons d'inertie thermique, la température prédéterminée peut également être différente de la température de fonctionnement optimal de la pile à combustible 10.

## Revendications

1. Pile à combustible (10) comprenant :
- un assemblage membrane/électrode (16) comportant une membrane échangeuse de protons (18) disposée entre une anode (20) et une cathode (22) ;
- deux plaques bipolaires (14) disposées de part et d'autre de l'assemblage membrane/électrode (16) et formant avec l'assemblage membrane/étectrode (16) une cellule élémentaire (12) ; et
- un diffuseur thermique diphasique (24) comprenant une zone de condensation (28) et une zone d'évaporation (30), la zone d'évaporation (30) étant disposée entre les plaques bipolaires (14) de deux cellules élémentaires (12) adjacentes ;
la pile à combustible (10) étant **caractérisée en ce que** le diffuseur thermique diphasique (24) comprend en outre un élément chauffant (32) disposé dans la zone de condensation (28) du diffuseur thermique diphasique (24).

2. Pile à combustible (10) selon la revendication 1, dans laquelle l'élément chauffant (32) comprend une résistance chauffante, un élément inductif, un tube de circulation de fluide chaud, une ailette de circulation de gaz chaud, un brûleur ou un élément pyrotechnique.

3. Pile à combustible (10) selon la revendication 1 ou 2, dans laquelle le diffuseur thermique diphasique (24) est disposé entre deux cellules élémentaires (12), toutes les N cellules élémentaires (12), N étant un nombre entier naturel supérieur ou égal à 1.

4. Pile à combustible (10) selon l'une quelconque des revendications précédentes, dans laquelle le diffuseur thermique diphasique (24) constitue une plaque collectrice de courant (26) de la pile à combustible (10),

5. Système comprenant une pile à combustible (10) selon l'une quelconque des revendications précédentes et un contrôleur (36), le contrôleur (36) étant configuré pour piloter l'élément chauffent (32) de sorte que pendant une phase de préchauffage (I), l'élément chauffant (32) chauffe la pile à combustible (10) jusqu'à une température prédéterminée (To), et que pendant une phase de fonctionnement en régime stable (II), l'élément chauffant (32) soit éteint de sorte que le diffuseur thermique diphasique (24) maintienne la température de la pile à combustible (10) dans une plage donnée.

6. Système selon la revendication 5, dans lequel le contrôleur (36) est également configuré pour piloter une source froide (F).

7. Procédé de régulation thermique d'une pile à combustible (10) selon l'une quelconque des revendications 1 à 4, **caractérisé en ce qu'**il comporte les étapes suivantes :
- pendant une phase de préchauffage (I), un contrôleur (36) pilote l'élément chauffant (32) de sorte que l'élément chauffant (32) chauffe la pile à combustible (10) jusqu'à une température prédéterminée (To) ; et
- pendant une phase de fonctionnement en régime stable (II), le contrôleur (36) éteint l'élément chauffant (32) de sorte que le diffuseur thermique diphasique (24) maintienne la température de la pile à combustible (10) dans une plage donnée.

8. Procédé de régulation thermique selon la revendication 7, dans lequel le contrôleur (36) pilote une source froide (F).

## Patentansprüche

1. Brennstoffzelle (10), umfassend:
- eine Membran/Elektrodenanordnung (16), umfassend eine Protonenaustauschmembran (18), die zwischen einer Anode (20) und einer Kathode (22) angeordnet ist,
- zwei bipolare Platten (14), die auf beiden Seiten der Membran/Elektrodenanordnung (16) angeordnet sind und mit der Membran/Elektrodenanordnung (16) eine Elementarzelle (12) bilden, und
- einen zweiphasigen thermischen Diffusor (24), umfassend eine Kondensationszone (28) und eine Verdampfungszone (30), wobei die Verdampfungszone (30) zwischen den bipolaren Platten (14) der beiden benachbarten Elementarzellen (12) angeordnet ist,
wobei die Brennstoffzelle (10) **dadurch gekennzeichnet ist, dass** der zweiphasige thermische Diffusor (24) außerdem ein Heizelement (32) umfasst, das in der Kondensationszone (28) des zweiphasigen thermischen Diffusors (24) angeordnet ist.

2. Brennstoffzelle (10) gemäß Anspruch 1, wobei das Heizelement (32) einen Heizwiderstand, ein induktives Element, ein Rohr zur Zirkulation von heißem Fluid, eine Rippe zur Zirkulation von heißem Gas, einen Brenner oder ein pyrotechnisches Element umfasst.

3. Brennstoffzelle (10) gemäß Anspruch 1 oder 2, wobei der zweiphasige thermische Diffusor (24) zwischen zwei Elementarzellen (12) von allen N Elementarzellen (12) angeordnet ist, wobei N eine ganze natürliche Zahl größer oder gleich 1 ist.

4. Brennstoffzelle (10) gemäß einem der vorhergehenden Ansprüche, wobei der zweiphasige thermische Diffusor (24) eine Stromsammelplatte (26) der Brennstoffzelle (10) darstellt.

5. System, umfassend eine Brennstoffzelle (10) gemäß einem der vorhergehenden Ansprüche und eine Steuereinheit (36), wobei die Steuereinheit (36) ausgelegt ist, um das Heizelement (32) derart zu steuern, dass während einer Vorheizphase (I) das Heizelement (32) die Brennstoffzelle (10) bis auf eine vorherbestimmte Temperatur (To) aufheizt, und dass während einer Betriebsphase mit stabiler Regelung (II) das Heizelement (32) derart ausgeschaltet wird, dass der zweiphasige thermische Diffusor (24) die Temperatur der Brennstoffzelle (10) in einem gegebenen Bereich hält.

6. System gemäß Anspruch 5, wobei die Steuereinheit (36) auch für die Steuerung einer Kältequelle (F) ausgelegt ist.

7. Verfahren zur thermischen Regelung einer Brennstoffzelle (10) gemäß einem der Ansprüche 1 bis 4, **dadurch gekennzeichnet, dass** dieses die folgenden Schritte umfasst:
- während einer Vorheizphase (I) steuert eine Steuereinheit (36) das Heizelement (32) derart, dass das Heizelement (32) die Brennstoffzelle (10) bis auf eine vorherbestimmte Temperatur (To) aufheizt, und
- während einer Betriebsphase mit stabiler Regelung (II) schaltet die Steuereinheit (36) das Heizelement (32) derart aus, dass der zweiphasige thermische Diffusor (24) die Temperatur der Brennstoffzelle (10) in einem gegebenen Bereich hält.

8. Verfahren zur thermischen Regelung gemäß Anspruch 7, wobei die Steuereinheit (36) eine Kältequelle (F) steuert.

## Claims

1. A fuel cell (10) comprising:
- a membrane electrode assembly (16) comprising a proton exchange membrane (18) arranged between an anode (20) and a cathode (22);
- two bipolar plates (14) arranged on either side of the membrane electrode assembly (16) and co-operating with the membrane electrode assembly (16) to form a unit cell (12); and
- a two-phase thermal diffuser (24) having a condensation zone (28) and an evaporation zone (30), the evaporation zone (30) being arranged between the bipolar plates (14) of two adjacent unit cells (12);
the fuel cell (10) being **characterized in that** the two-phase thermal diffuser (24) further includes a heating element (32) arranged in the condensation zone (28) of the two-phase thermal diffuser (24).

2. A fuel cell (10) according to claim 1, wherein the heating element (32) comprises a heating resistance, an inductive element, a hot fluid flow tube, a hot gas flow fin, a burner, or a pyrotechnic element.

3. A fuel cell (10) according to claim 1 or claim 2, wherein the two-phase thermal diffuser (24) is arranged between two unit cells (12), once every N unit cells (12), where N is a natural integer greater than or equal to 1.

4. A fuel cell (10) according to any preceding claim, wherein the two-phase thermal diffuser (24) constitutes a current collector plate (26) of the fuel cell (10).

5. A system comprising a fuel cell (10) according to any preceding claim and a controller (36), the controller (36) being configured to control the heating element (32) so that during a preheating stage (I) the heating element (32) heats the fuel cell (10) up to a predetermined temperature (To), and during a stage (II) of operation under steady conditions, the heating element (32) is switched off so that the two-phase thermal diffuser (24) keeps the temperature of the fuel cell (10) in a given range.

6. A system according to claim 5, wherein the controller (36) is also configured to control a heat sink (F).

7. A temperature regulation method for regulating the temperature of a fuel cell (10) according to any one of claims 1 to 4, the method being **characterized in that** it comprises the following steps:
- during a preheating stage (I), a controller (36) controls the heating element (32) so that the heating element (32) heats the fuel cell (10) up to a predetermined temperature (To); and
- during a stage (II) of operation under steady conditions, the controller (36) switches off the heating element (32) so that the two-phase thermal diffuser (24) keeps the temperature of the fuel cell (10) in a given range.

8. A temperature regulation method according to claim 7, wherein the controller (36) controls a heat sink (F).
